Europäisches Patentamt

European Patent Office

Office européen des brevets

(19)

(11) Numéro de publication : **0 460 978 B1**

(12) **FASCICULE DE BREVET EUROPEEN**

(45) Date de publication du fascicule du brevet :
07.09.94 Bulletin 94/36

(51) Int. Cl.$^5$ : **H01S 3/105**

(21) Numéro de dépôt : **91401074.9**

(22) Date de dépôt : **23.04.91**

(54) **Laser de puissance à miroir actif.**

(30) Priorité : **02.05.90 FR 9005539**

(43) Date de publication de la demande :
**11.12.91 Bulletin 91/50**

(45) Mention de la délivrance du brevet :
**07.09.94 Bulletin 94/36**

(84) Etats contractants désignés :
**DE GB IT**

(56) Documents cités :
ELECTRONICS LETTERS, vol. 24, no. 4, 18 février 1988, pages 216-217; J. OHTA et al.:"All-optical active switch using a multiple quantum well nonlinear etalon as a laser diode mirror"
APPLIED PHYS. LETT., vol. 50, no. 18, 4 mai 1987, pages 1225-1227; P.L. GOURLEY et al.:"Visible, room-temperature, surface-emitting laser using an epitaxial Fabry-Perot resonator with AlGaAs/AlAs quarter-wave high reflectors and AlGaAs/GaAs multiple quantum wells"

(56) Documents cités :
ELECTRONICS LETTERS, vol. 24, no. 10, 12 mai 1988, pages 629-630; J. FAIST et al.:"Optically pumped GaAs surface-emitting laser with integrated bragg reflector"
APPLIED PHYS LETT., vol. 51, no. 18, 2 novembre 1987, pages 1395-1397; P.L.GOURLEY et al.: "Optical bleaching in an epitaxial (Al,Ga)As Fabry-Perot resonator"
APPLIED PHYS. LETT., vol. 51, no. 23, 7 décembre 1987, pages 1876-1878; G.W.YOFFE et al.: "Modulation of light by an electrically tunable multilayer interference filter"

(73) Titulaire : **THOMSON-CSF**
**173, Boulevard Haussmann**
**F-75008 Paris (FR)**

(72) Inventeur : **Pocholle, Jean-Paul**
**Thomson-CSF,**
**173, Boulevard Haussmann**
**F-75008 Paris (FR)**
Inventeur : **Papuchon, Michel**
**Thomson-CSF,**
**173, Boulevard Haussmann**
**F-75008 Paris (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

EP 0 460 978 B1

Jouve, 18, rue Saint-Denis, 75001 PARIS

**Description**

L'invention concerne les lasers, et plus particulièrement les lasers de puissance.

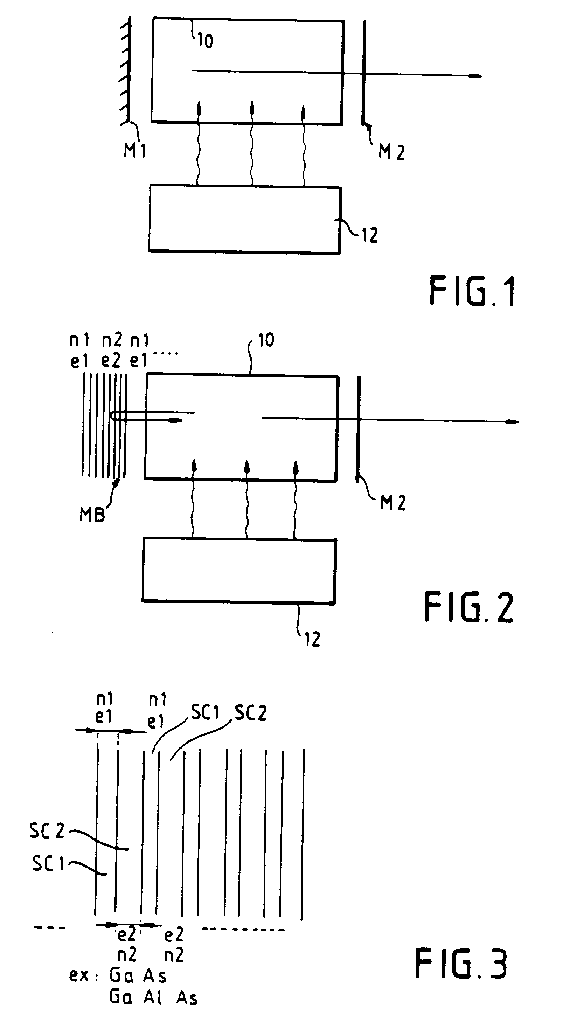

On rappelle, en référence à la figure 1, qu'un laser est constitué généralement par un milieu amplificateur 10 placé dans une cavité dont les extrémités sont constituées par des miroirs M1 et M2, l'un d'eux (le miroir de sortie M2) étant partiellement transparent pour la longueur d'onde émise par le laser.

Le milieu amplificateur 10 comporte des ions actifs qui peuvent être excités par une source de pompage 12 (souvent un laser auxiliaire de pompage) ; cette source a pour fonction d'exciter les électrons des ions actifs d'un niveau d'énergie à un niveau supérieur d'où ils peuvent retomber, directement ou indirectement, au premier niveau en émettant des photons à une longueur d'onde déterminée ou dans une gamme de longueurs d'onde déterminée, et avec une cohérence de phase.

Un but de l'invention est d'améliorer les possibilités de réalisation des lasers, notamment dans la manière dont est excité le milieu amplificateur, soit pour faciliter l'émission à une fréquence bien déterminée, soit pour rendre la fréquence d'émission accordable par des moyens simples.

Parmi les défauts des lasers existant actuellement, on peut en effet signaler par exemple que les lasers de puissance peuvent présenter plusieurs modes de résonnance, de sorte qu'ils tendent à émettre plusieurs longueurs d'onde dont certaines sont indésirables. Il faut donc des moyens annexes (filtre biréfringents, étalons, ...) pour éliminer ces longueurs d'onde et ces moyens se traduisent par une augmentation de la complexité du laser, et une perte de puissance lorsque l'élimination est faite par filtrage.

On peut aussi signaler que pour obtenir un laser accordable (que ce soit un laser de puissance ou non) on doit en général utiliser des filtres, avec un réglage de température pour effectuer l'accord ; ce sont là encore des moyens complexes et engendrant des pertes de puissance.

L'invention propose une nouvelle structure de laser qui permet d'améliorer les possibilités et les performances des lasers soit pour faciliter l'émission à une fréquence bien déterminée, soit pour rendre cette fréquence accordable.

Selon l'invention, on propose un laser comportant un milieu amplificateur, une source de pompage pour exciter le milieu amplificateur et produire des photons de fluorescence, et deux miroirs définissant une cavité contenant le milieu amplificateur, caractérisé en ce que l'un au moins des miroirs est un miroir actif produisant de la lumière à une longueur d'onde déterminée, en réponse à une excitation par les photons de fluorescence du milieu amplificateur.

Ainsi, même si le milieu amplificateur tend à émettre différentes longueurs d'onde, il y aura une longueur d'onde d'émission stimulée préférentielle, c'est celle qui correspond à l'émission par le miroir actif.

De préférence, selon l'invention,

1) - le miroir actif est un réflecteur de Bragg constitué par un empilement répété de couches alternées d'indices optiques différents et d'épaisseurs choisies pour assurer un pic de réflectivité perpendiculairement au miroir, pour la longueur d'onde d'émission laser désirée, et

2) - l'une au moins des couches de l'alternance est une couche semiconductrice présentant une énergie de transition radiative (en pratique ce sera le plus souvent l'énergie de bande interdite) correspondant sensiblement à la longueur d'onde d'émission laser désirée, et une énergie de bande interdite inférieure ou égale à l'énergie des photons de fluorescence de sorte que ladite couche absorbe une partie des photons de fluorescence émis par le milieu amplificateur.

Cette structure de laser revient essentiellement à dire que l'un des miroirs est en quelque sorte constitué comme un très petit laser à semiconducteur dont la cavité est constituée par l'empilement des couches du réflecteur de Bragg. Cette minidiode laser (cavité de très faible longueur) est excitée par les photons de fluorescence issus du milieu amplificateur excité par la source de pompage. Elle émet à une fréquence caractéristique d'une transition d'énergie radiative du semiconducteur utilisé, et cette fréquence se situe justement à la fois dans le pic de réflectivité du miroir et dans une zone de résonnance de la mini cavité constituée par l'empilement de couches. Il y a donc émission stimulée de lumière cohérente par le miroir lui-même, dans une direction perpendiculaire au miroir, donc vers le milieu amplificateur qui émet alors lui aussi en émission stimulée, à la longueur d'onde pour laquelle la résonnance de la cavité est maximale, c'est-à-dire à la longueur d'onde correspondant au pic de réflectivité du réflecteur de Bragg.

Le miroir utilisé à une extrémité de la cavité est donc un miroir actif et non un miroir passif ; il ne se contente pas de réfléchir la lumière, mais il émet lui-même de la lumière, et même une lumière cohérente.

Comme le réflecteur de Bragg (qu'on peut appeler ici "miroir-laser" puisqu'il accomplit à la fois la fonction de miroir et la fonction de laser) constitue une cavité laser de très faible épaisseur, cette cavité ne peut résonner que sur un mode unique. Le miroir-laser est donc une source cohérente monofréquence et le milieu amplificateur du laser principal émettra lui-même à une fréquence unique.

Parmi les avantages importants de l'invention, on peut citer :

- la facilité d'émission à une fréquence bien déterminée, même pour les lasers ayant plusieurs modes de résonnance longitudinaux, et spécialement pour les lasers de puissance de type vibronique,

- la possibilité d'avoir un laser accordable dans une bande étroite par simple déplacement mécanique du miroir-laser, comme on l'expliquera plus loin.

D'autres caractéristiques et avantages de l'invention apparaîtront à la lecture de la description détaillée qui suit et qui est faite en référence aux dessins annexés dans lesquels :

- la figure 1 représente schématiquement la constitution classique d'un laser,
- la figure 2 représente schématiquement la structure générale d'un laser selon l'invention,
- la figure 3 représente la constitution du miroir-laser fermant une extrémité de la cavité du laser principal,
- la figure 4 représente une courbe de réflectivité d'un miroir à couches semiconductrices alternées à base d'arséniure de gallium-aluminium avec deux compositions différentes;
- la figure 5 représente une autre courbe de réflectivité, avec des compositions ajustées pour que le pic de réflectivité se situe à une longueur d'onde qui est très proche de la longueur d'onde de transition de la bande interdite de l'une des couches;
- la figure 6 représente une autre réalisation de l'invention;
- les figures 7, 8 et 9 représentent encore d'autres variantes de réalisation.

Sur la figure 2, on voit la structure générale du laser selon l'invention : l'un des miroirs définissant la cavité du laser, dans cet exemple le miroir M1 qui n'est pas le miroir de sortie, est remplacé par un réflecteur de Bragg MB.

Le réflecteur est un empilement de couches alternées d'indices optiques n1 et n2 et d'épaisseurs respectives e1 et e2. L'alternance n1, e1 puis n2, e2 se répète de multiples fois (par exemple quelques dizaines de fois) pour permettre l'obtention d'un pic de réflectivité dont le sommet représente un coefficient de réflexion d'au moins 90 à 95 %.

La longueur d'onde Lo à laquelle se situe le maximum de ce pic de réflectivité est

$$L_o = 2(n1e1 + n2e2)$$

Les épaisseurs sont mesurées perpendiculairement à la surface du miroir pour que la longueur d'onde calculée corresponde à un maximum de réflectivité perpendiculairement au miroir.

On notera que dans certains cas on peut souhaiter qu'il y ait plusieurs pics de réflectivité principaux séparés, et dans ce cas l'alternance de couches d'indices différents peut être plus complexe qu'une simple alternance (n1,e1)/(n2,e2) ; on interposera par exemple de temps en temps dans l'alternance une troisième couche n3,e3 ; ou encore l'alternance sera une alternance régulière ternaire (n1,e1)/(n2,e2)/(n3,e3) etc.

On se contentera cependant dans la suite d'expliquer l'invention à propos d'une simple alternance binaire (n1,e1)/(n2,e2) conduisant à un pic de réflectivité principal unique.

Selon l'invention, les couches alternées du réflecteur de Bragg, représentées en détail agrandi à la figure 3, sont constituées à partir de matériaux semiconducteurs ; ou tout au moins une des couches est en matériau semiconducteur. Dans la pratique, les deux couches seront semiconductrices, pour des raisons de facilité de fabrication, et c'est pourquoi on a représenté à la figure 3 une alternance régulière d'un premier matériau semiconducteur SC1 (indice n1, épaisseur e1) et d'un deuxième matériau semiconducteur SC2 (indice n2, épaisseur e2). On supposera que celui qui est nécessairement semiconducteur est le matériau SC1.

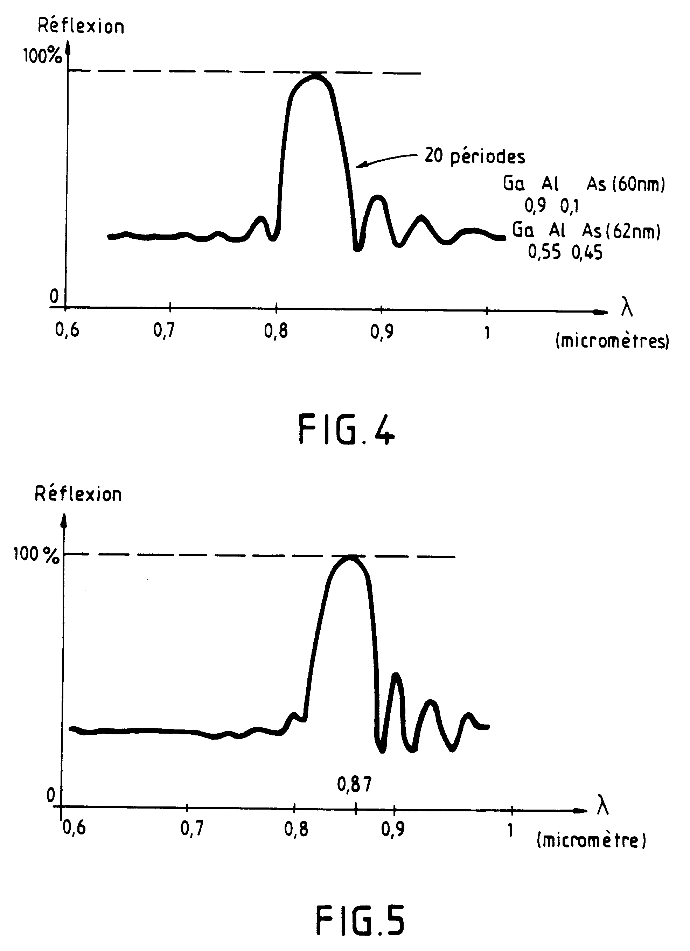

La figure 4 représente à titre d'exemple le pic de réflectivité obtenu à l'aide d'une alternance de couches à base d'arséniure de gallium-aluminium ayant les compositions suivantes :$Ga_{0,9}Al_{0,1}As$ (60 nanomètres) et $Ga_{0,59}Al_{0,45}As$ (62 nanomètres) ; l'empilement est de 20 périodes; le pic obtenu est à une longueur d'onde de 830 nanomètres et monte à 94 %.

En augmentant le nombre de périodes on augmente ce dernier chiffre : avec 30 périodes on atteint 98 %.

Le matériau semiconducteur SC1 est un matériau dont la structure électronique répond à deux critères :

- d'abord cette structure est telle que les électrons peuvent être excités dans des niveaux d'énergie supérieurs par les photons de fluorescence émis par le milieu amplificateur du laser. Cela veut dire en général, pour un matériau semiconducteur SC1 classique, que sa largeur de bande interdite, entre la bande de valence et la bande de conduction, est plus faible que l'énergie de ces photons de fluorescence ; pour des matériaux semiconducteurs à multiples puits quantiques, la condition peut s'exprimer différemment, mais dans tous les cas les électrons doivent pouvoir être excités dans des niveaux d'énergie supérieurs par les photons de fluorescence ;
- ensuite, le semiconducteur est tel que les électrons excités peuvent revenir spontanément ou de manière stimulée à un niveau inférieur, par une transition radiative, c'est-à-dire en émettant des photons à une longueur d'onde bien déterminée liée à la différence de niveaux d'énergie de la transition;
- et enfin, la longueur d'onde de ces photons émis par le matériau semiconducteur SC1 doit être justement située dans le pic de réflectivité du réflecteur de Bragg (pas forcément au sommet du pic, mais dans le pic).

En pratique, pour des semiconducteurs massifs classiques, la transition radiative est tout simplement un retour des électrons depuis la bande de conduction où ils ont été excités jusqu'à la bande de valence, et l'énergie de transition radiative est alors simplement l'énergie correspondant à la bande interdite. Il y a cependant des cas où l'énergie de la transition radiative lors du retour des électrons n'est pas une énergie de bande interdite (semiconducteurs à puits quantiques multiples).

Le deuxième matériau SC2 n'est pas forcément semiconducteur ; on lui demande seulement d'être transparent aux longueurs d'onde des photons de fluorescence qui viennent exciter les électrons du semiconducteur SC1, et on lui demande d'avoir un indice optique différent de celui du matériau SC1 ; le maximum de coefficient de réflexion du réflecteur MB est d'ailleurs d'autant plus élevé que la différence d'indices n2-n1 est plus grande, de sorte que si cette différence est suffisante on peut se contenter d'un nombre modéré de périodes spatiales dans d'empilement de couches alternées (20 ou 30 par exemple).

Par ailleurs, on notera que la largeur spectrale du pic de réflectivité s'accroît avec la différence d'indices puisque la largeur spectrale à mi-hauteur du pic est proportionnelle à (n1-n2)/(n1+n2).

Il est intéressant que le pic de réflectivité ait une largeur spectrale importante dans le cas où on désire que le laser soit accordable en fréquence. On explicitera ce point plus loin. Dans l'exemple de la figure 4, on voit que cette largeur (largeur du pic à mi-hauteur) est de l'ordre de 50 nanomètres.

Dans le cas où le laser principal doit être strictement monofréquence il vaut mieux avoir une largeur de bande plus faible donc une différence d'indices n2-n1 plus faible et un plus grand nombre de paires de couches dans le réflecteur.

Pour bien faire comprendre le fonctionnement du laser selon l'invention, on va choisir un exemple précis, en gardant en mémoire cependant le fait que l'invention est applicable à un grand nombre de cas, pour des gammes de longueurs d'onde très variées, par exemple aussi bien dans l'ultraviolet que dans le visible et dans l'infrarouge.

On suppose que le laser est un laser de puissance pulsé dont le milieu amplificateur est un cristal de saphir dopé au titane trivalent ($Ti^{3+}$:$Al_2O_3$).

L'ion trivalent $Ti^{3+}$ présente la particularité d'émettre une fluorescence qui s'étend de 0,65 micromètre à 1,1 micromètre en régime impulsionnel.

Pour faire le réflecteur de Bragg MB on choisit une alternance de deux compositions semiconductrices SC1 et SC2 qui sont respectivement de l'arséniure de gallium et de l'arséniure de gallium-aluminium.

SC1 : GaAs, épaisseur e1 = 64 nanomètres

SC2 : $Ga_{0,55}Al_{0,45}As$, épaisseur = 63 nanomètres.

Il y a 25 périodes spatiales dans l'empilement.

La courbe de réflectivité en fonction de la longueur d'onde est donnée à la figure 5. On a choisi les épaisseurs e1 et e2 en fonction des indices optiques des matériaux pour obtenir un pic centré sur la longueur d'onde $L_0$ = 0,87 micromètre ; le maximum du pic est très proche de 100 %.

Ce choix de $L_0$ est fait parce que le semiconducteur SC1, excité, est susceptible d'émettre spontanément à une longueur d'onde voisine de 0,87 micromètre par recombinaison des paires électrons-trous générées lors de l'excitation. En effet, la largeur de bande interdite de l'arséniure de gallium GaAs de la couche SC1 est de 1,424 eV.

Par ailleurs, il faut se rappeler qu'on a choisi le deuxième matériau SC2 du réflecteur de sorte qu'il soit transparent pour une grande partie du rayonnement de fluorescence de l'ion $Ti^{3+}$, et aussi pour qu'il ait un indice optique $n_2$ suffisamment différent de $n_1$.

Dans le cas d'un matériau semiconducteur tel que l'arséniure de gallium-aluminium le problème est facilement résolu puisque l'indice optique est lié à la largeur de bande interdite.

En choisissant un matériau semiconducteur SC2 de largeur de bande interdite supérieure à celle du matériau semiconducteur SC1, on obtient le double résultat désiré : l'indice n2 est différent de n1 (plus petit) et le matériau SC2 est transparent aux longueurs d'onde absorbées par le matériau SC1, (entre 0,65 micromètre et 0,87 micromètre). En fait, le matériau choisi dans cet exemple est transparent pour pratiquement tout le spectre des photons fluorescents émis par le milieu amplificateur (0,65 micromètre à 1,1 micromètre).

Le laser fonctionne de la manière suivante : la source de pompage (flash lumineux ou laser de pompage en général) excite les ions de titane trivalent qui émettent par fluorescence spontanée des photons dans le spectre 0,65 à 1,1 micromètre.

Ces photons traversent les couches transparentes d'arséniure de gallium aluminium SC2. Certains traversent aussi les couches d'arséniure de gallium SC1 : ce sont les photons dans la bande spectrale de 0,9 à 1,1 micromètre environ. Mais les photons émis entre 0,65 et 0,87 micromètre sont absorbés par les couches SC1. Ils produisent des paires électrons-trous en grande quantité.

Par recombinaison, les paires électrons-trous engendrent une émission photonique au voisinage de la longueur d'onde 0,87 micromètre puisque cette longueur d'onde correspond à l'énergie de bande interdite du semiconducteur SC1 dans lequel ces paires sont accumulées.

Pour cette longueur d'onde d'environ 0,87 micromètre, l'empilement de couches du réflecteur de Bragg constitue une cavité résonnante puisqu'elle est située en plein dans le pic de réflectivité. Il y a alors émission laser stimulée à l'intérieur même de l'empilement de Bragg, à une fréquence déterminée par le pic de réflectivité de la courbe de la figure 5.

Ainsi, alors que, vu du côté milieu amplificateur, le réflecteur de Bragg se comporte comme un miroir sélectif à 0,87 micromètre, vu de l'intérieur du miroir, il se comporte comme une cavité laser à la même fréquence, avec un milieu amplificateur semiconducteur excité optiquement.

Le réflecteur de Bragg à couche SC1 semiconductrice se comporte donc comme un mini laser à la longueur d'onde pour laquelle la cavité principale du laser (entre le miroir MB et le miroir de sortie) va être résonnante (résonnance due au pic de réflectivité de l'un des miroirs de la cavité).

Les photons de lumière cohérente engendrés dans le réflecteur de Bragg sortent en partie vers le milieu amplificateur principal 12 et y stimulent l'émission d'une lumière cohérente à la même longueur d'onde.

On remarquera avec intérêt que la très faible épaisseur du réflecteur de Bragg (25 empilements de paires de couches d'environ 60 nanomètres soit environ 3 micromètres) empêche qu'il y ait plusieurs modes de résonnance. Il n'y a donc qu'une seule longueur d'onde laser émise du réflecteur vers le milieu amplificateur principal et donc une seule longueur d'onde stimulée dans ce milieu.

Il n'est plus nécessaire de prévoir dans la cavité un filtre de sélection de longueur d'onde.

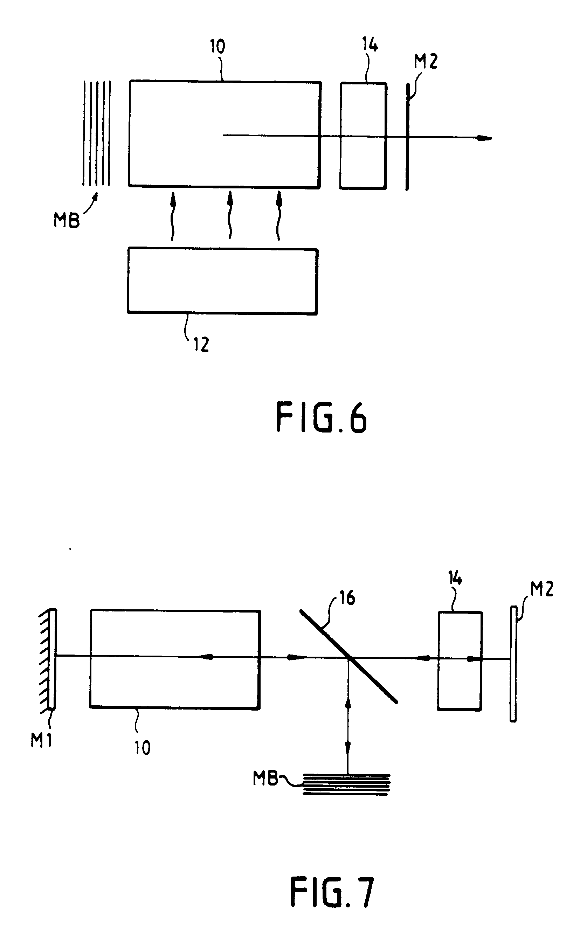

Dans la pratique, on fera fonctionner le laser en mode impulsionnel grâce à un modulateur optique incorporé à la cavité principale. Le modulateur 14, représenté à la figure 6 permet de bloquer pendant un moment la sortie du faisceau laser. Tous les photons de fluorescence du milieu amplificateur contribuent donc à augmenter la quantité de paires électrons-trous engendrées dans le matériau semiconducteur SC1 du réflecteur de Bragg. Lorsqu'on débloque le modulateur les conditions de résonnance apparaissent et permettent la libération de l'émission stimulée. On peut ainsi fournir des impulsions laser de forte puissance, pendant une durée plus brève que la durée d'excitation par la source de pompage (excitation qui est elle-même en général impulsionnelle, la fluorescence de l'ion titane trivalent s'effectuant en mode relaxé).

On peut envisager que le miroir-laser ou miroir actif MB soit le miroir de sortie de la cavité laser principale, ou que les deux miroirs M1 et M2 des lasers classiques soient remplacés par des miroirs de Bragg à semiconducteur selon l'invention.

Dans le cas où le miroir de sortie est un réflecteur de Bragg à semiconducteur il faut faire en sorte que le pic de réflectivité obtenu par ce miroir corresponde à une valeur acceptable permettant de laisser sortir le faisceau laser (par exemple 95 % au sommet du pic).

Dans ce qui précède on a parlé de couche semiconductrice à l'intérieur du miroir de Bragg. On englobera sous ce concept les couches non massives et tout particulièrement les structures à multiples puits quantiques (des modifications locales de structure sont créées dans une couche pour faire apparaître des niveaux d'énergie d'électrons qui n'existent pas naturellement dans la couche et qui permettent des transitions particulières). On englobera plus généralement toutes les structures de couches excitables optiquement (par les photons de fluorescence du milieu amplificateur) et susceptibles de libérer des photons à une longueur d'onde correspondant à un pic de réflectivité de l'alternance de couches du réflecteur. Les recombinaisons qui ont lieu pour émettre ces photons peuvent alors très bien se situer à l'intérieur d'une bande de valence ou de conduction plutôt qu'entre deux bandes.

Bien entendu, l'invention serait applicable dans le cas où la source de pompage du milieu amplificateur principal serait autre qu'une source optique : il est connu de faire l'excitation avec un courant électrique (lasers à semiconducteurs) et les photons émis sous l'influence de ce pompage électrique sont appelés des photons de luminescence plutôt que de fluorescence, sans que cela change rien au principe de l'invention.

La figure 7 représente une variante de réalisation dans laquelle la cavité principale du laser comporte non pas deux miroirs mais trois miroirs M1, M2 et MB, avec en outre une lame semi-transparente 16.

Les miroirs M1 et M2 sont en regard l'un de l'autre et définissent une première cavité du laser, contenant le milieu amplificateur 10.

M1 est classiquement le miroir à coefficient de réflexion maximal (pour la longueur d'onde laser et pour toutes les longueurs d'onde de fluorescence éventuellement émises). M2 est le miroir de sortie à coefficient de réflexion légèrement plus faible. La lame séparatrice 16, sur le trajet des photons entre les miroirs parallèles M1 et M2, dirige une partie des photons vers le réflecteur le Bragg MB de sorte qu'on définit une deuxième cavité laser contenant le milieu amplificateur 10. Cette cavité comprend le miroir M1 et la lame séparatrice 16 et se termine par le réflecteur MB.

Cette disposition permet de dissocier le réflecteur de Bragg des autres miroirs mais le fonctionnement est exactement le même. Une fraction des photons de fluorescence émis par le milieu amplificateur est dirigée par la lame 16 vers le réflecteur MB et excite les couches semiconductrices de celui-ci. Une émission laser est engendrée dans le miroir-laser MB, à une longueur d'onde définie par le matériau semiconducteur SC1 de ce miroir. Cette longueur d'onde est renvoyée par la lame séparatrice 16 pour stimuler une émission à la même longueur d'onde dans le milieu amplificateur préalablement excité. Le rapport entre coefficient de réflexion et coefficient de transmission de la lame séparatrice 16 permet de régler la quantité d'énergie transmise au réflecteur de Bragg MB.

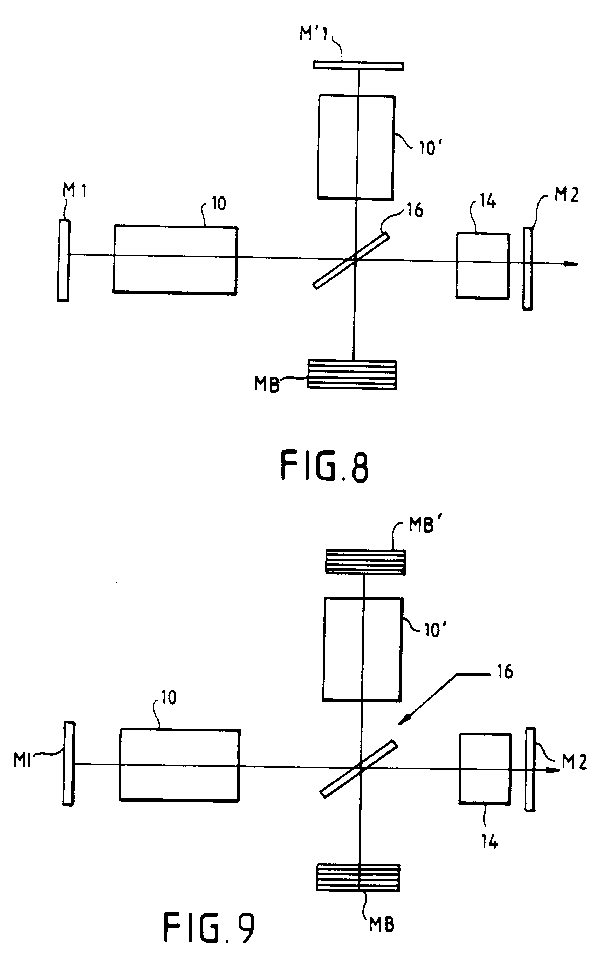

D'autres variantes de réalisation sont indiquées aux figures 8 et 9.

La variante de la figure 8 utilise deux milieux amplificateurs 10 et 10′ dans des cavités respectives terminées respectivement par des miroirs M1 et M′1 perpendiculaires, les faisceaux des deux cavités étant réunis à travers une lame oblique semi-réfléchissante 16. Cette double amplification permet d'augmenter la puissance globale du laser. M2 est encore le miroir de sortie. Le réflecteur de Bragg est disposé dans cet exemple perpendiculairement au miroir de sortie M2, mais il pourrait être remplacé par un miroir classique à coefficient de réflexion très élevé et le miroir M1 ou M′1 serait alors remplacé par un réflecteur de Bragg à semiconducteur.

Dans la variante de la figure 9, il y a encore deux cavités résonnantes réunies par une lame semi-réfléchissante comme à la figure 8, et l'une des cavités est délimitée par deux miroirs de Bragg à semiconducteurs MB et MB′, alors que l'autre cavité est délimitée par des miroirs classiques M1 et M2.

Le laser selon l'invention est applicable non seulement pour des lasers de puissance en vue d'obtenir une fréquence unique d'émission sans filtres complexes, mais aussi pour réaliser des lasers accordables en fréquence.

En effet, on a vu que la longueur d'onde d'émission laser est liée aux conditions de réflectivité du miroir de Bragg et que ces conditions dépendent beaucoup des épaisseurs e1 et e2 des couches alternées du miroir puisque le pic de réflectivité se situe à une longueur d'onde $L_o$ telle que :

$$L_o = 2(n1e1 + n2e2)$$

Il est alors possible de réaliser un laser dans lequel plusieurs miroirs de Bragg sont interchangeables pour fermer la cavité du laser principal par un miroir au choix selon la fréquence désirée. La fréquence est dictée par le pic de réflectivité du miroir considéré et ce pic de réflectivité est lié aux épaisseurs des couches SC1 et C2.

Il est aussi possible d'obtenir un laser accordable en continu si le miroir est non uniforme, c'est-à-dire si les épaisseurs des couches varient le long de la surface du miroir. On sait d'ailleurs faire varier les épaisseurs de dépôts de couches semiconductrices tout simplement en établissant des gradients de température du substrat pendant l'opération de dépôt en phase gazeuse des couches sur le substrat. Le laser est alors accordable en continu par déplacement mécanique du miroir de Bragg pour amener devant la cavité (plus précisément devant la partie de milieu amplificateur excitée par le laser de pompage) une portion de miroir ayant un pic de réflectivité à la fréquence désirée.

A titre d'exemple, on a évalué les longueurs d'onde pour deux structures qui se différencient l'une de l'autre à la ois par les épaisseurs et par les compositions :

- A) : première couche GaAs épaisseur 60 nanomètres

deuxième couche $Ga_{0,55}Al_{0,45}As$, 63 nm la largeur de bande interdite est de 1,424 eV et correspond à 0,87 micromètre.
- B) : première couche $Ga_{0,95}Al_{0,05}As$, 61nm nm

deuxième couche $Ga_{0,55}Al_{0,45}As$, 60 nm la largeur de bande interdite est 1,482 eV et l'émission est à 0,836 micromètre.

Dans le cas des lasers de puissance de saphir dopé au titane trivalent, les alliages semiconducteurs du réflecteur de Bragg seront de préférence des composés à base d'arséniure de gallium-aluminium de compositions différentes, permettant d'obtenir des largeurs de bande interdite correspondant à des longueurs d'onde d'émission de 0,7 à 0,87 micromètres environ.

Dans le cas où on désire de plus courtes longueurs d'onde (0,6 à 0,7 micromètre par exemple), des alternances de couches d'arséniure de gallium-aluminium et de fluorures de calcium-strontium pourront être utilisés. Ces couches de fluorure sont diélectriques et transparentes dans le domaine visible. L'indice du fluorure de calcium-strontium est beaucoup plus faible que celui de l'arséniure de gallium aluminium et la largeur spectrale du pic de sélectivité peut être beaucoup plus importante.

Le composé fluoré peut également être dopé avec une terre rare, ce qui permet de réaliser un miroir laser pouvant travailler à deux longueurs d'onde simultanément, par exemple 0,87 micromètres dus à l'arséniure de gallium et 1,06 microns dus à un dopage au néodyme. La terre rare de dopage peut aussi être de l'erbium par exemple.

Pour réaliser des lasers dans l'ultraviolet, on peut utiliser comme réflecteur de Bragg actif des composés II-VI tels que des séléniures de zinc ou de cadmium, des tellurures de cadmium, des sulfures de zinc ou de cadmium.

Des lasers non dangereux pour l'oeil (vers 1,5 micromètre) peuvent aussi être réalisés de cette manière en utilisant l'ion erbium comme ion actif du laser principal et des alternances GaInAs et InP (arséniure de gallium indium et phosphure d'indium) comme couches semiconductrices du réflecteur de Bragg. Le laser principal peut aussi être alors un laser YAG au néodyme dont l'émission est translatée vers les plus grandes longueurs d'onde par effet Raman stimulé.

Les lasers YAG solides opérant à 2 micromètres peuvent également être pilotés selon l'invention par l'intermédiaire d'un laser semiconducteur à émission surfacique utilisant des composés GaInAsSb/AlGaAsSb, l'ion actif du laser principal étant l'ion holmium trivalent ($Ho^{3+}$).

Enfin, l'émission à 1,064 micromètre d'un laser YAG au néodyme peut être contrôlée à partir d'un empilement de couches semiconductrices de type

$In_{x1}Ga_{1-x1}As/Al_{x2}Ga_{1-x2}As$.

Pour les couches composées de type $In_xGa_{1-x}As/GaAs$, à température ambiante, l'énergie de bande interdite obéit à la relation empirique approximative :

$$Eg = 1,424 - 1,615x + 0,555x^2$$

la composition en indium appropriée pour réaliser un miroir de Bragg selon l'invention est imposée par la position spectrale de l'émission de fluorescence de l'ion actif néodyme trivalent; on prendra un miroir composé de préférence de couches $In_{0,17}Ga_{0,83}As$ alternant avec des couches GaAs.

## Revendications

1. Laser comportant un milieu amplificateur (10), une source de pompage (12) pour exciter le milieu amplificateur et produire des photons de fluorescence, et deux miroirs définissant une cavité contenant le milieu amplificateur, caractérisé en ce que l'un au moins des miroirs est un miroir actif (MB) produisant de la lumière à une longueur d'onde déterminée, en réponse à une excitation par les photons de fluorescence du milieu amplificateur.

2. Laser selon la revendication 1, caractérisé en ce que :

a) - le miroir actif (MB) est un réflecteur de Bragg constitué par un empilement répété de couches alternées (SC1, SC2) d'indices optiques différents (n1, n2) et d'épaisseurs (e1, e2) choisies pour assurer un pic de réflectivité perpendiculairement au miroir, pour une longueur d'onde sensiblement égale à la longueur d'onde d'émission laser désirée, et

b) - l'une au moins des couches de l'alternance est une couche semiconductrice (SC1) présentant une énergie de transition radiative correspondant sensiblement à la longueur d'onde d'émission laser désirée, et une énergie de bande interdite inférieure ou égale à l'énergie des photons de fluorescence de sorte que ladite couche absorbe une partie des photons de fluorescence émis par le milieu amplificateur.

3. Laser selon la revendication 2, caractérisé en ce que les deux couches de l'alternance sont semiconductrices, la deuxième couche (SC2) présentant une énergie de bande interdite supérieure à l'énergie des photons de fluorescence pour au moins une partie des photons qui peuvent être absorbés par la première couche, de manière à être transparente pour ces photons.

4. Laser selon l'une des revendications 2 et 3, caractérisé en ce que la ou les couches semiconductrices sont massives.

5. Laser selon l'une des revendications 2 et 3, caractérisé en ce que la ou les couches semiconductrices sont des couches à puits quantiques multiples.

6. Laser selon la revendication 2, caractérisé en ce que la deuxième couche de l'alternance est diélectrique et transparente pour au moins une partie des photons absorbables par la première couche.

7. Laser selon la revendication 2, caractérisé en ce que les couches sont des composés à base d'arséniure de gallium.

8. Laser selon la revendication 7, caractérisé en ce que l'une des couches contient de l'aluminium ou de l'indium ou de l'antimoine.

9. Laser selon la revendication 2, caractérisé en ce que la deuxième couche est un fluorure de calcium-strontium.

10. Laser selon la revendication 2, caractérisé en ce que les couches semiconductrices sont des composés II-VI tels que ZnSe, CdTe, ZnS, CdS, CdSe.

11. Laser selon l'une des revendications précédentes, caractérisé en ce qui le milieu amplificateur est un saphir dopé au titane.

12. Laser selon l'une des revendications précédentes, caractérisé en ce que le miroir actif comporte différentes régions ayant des pics de réflectivité à des longueurs d'onde différentes.

13. Laser selon l'une des revendications précédentes, caractérisé en ce qu'il comporte une cavité pourvue de deux miroirs classiques et une lame séparatrice semi-réfléchissante (16) pour renvoyer vers le miroir actif une partie des photons de fluorescence émis par le milieu amplificateur.

## Patentansprüche

1. Laser mit einem verstärkenden Medium (10), einer Pumpquelle (12), um das verstärkende Medium anzuregen und Floureszenz-Lichtquanten zu erzeugen, und zwei Spiegeln, die einen das verstärkende Medium enthaltenden Hohlraum definieren, dadurch gekennzeichnet, daß wenigstens einer der Spiegel ein aktiver Spiegel (MB) ist, der in Abhängigkeit von einer Anregung durch die Fluoreszenz-Lichtquanten des verstärkenden Mediums Licht mit einer bestimmten Wellenlänge erzeugt.

2. Laser nach Anspruch 1, dadurch gekennzeichnet, daß:

a) - der aktive Spiegel (MB) ein Bragg-Reflektor ist, der durch eine wiederholte Aufeinanderschichtung von abwechselnden Schichten (SC1, SC2) mit unterschiedlichen Brechungsindizes (n1, n2) und Dicken (e1, e2) gebildet ist, die zum Bilden eines Reflektivitätsmaximums senkrecht zum Spiegel für eine Wellenlänge gewählt sind, die im wesentlichen gleich der gewünschten Emissionswellenlänge des Lasers ist, und

b) - wenigstens eine der abwechselnden Schichten eine Halbleiterschicht (SC1) ist, die eine im wesentlichen der gewünschten Emissionswellenlänge des Lasers entsprechende Strahlungsübergangsenergie und eine Energie des verbotenen Bandes besitzt, die kleiner oder gleich der Energie der Fluoreszenz-Lichtquanten ist, so daß diese Schicht einen Teil der vom verstärkenden Medium abgegebenen Floureszenz-Lichtquanten absorbiert.

3. Laser nach Anspruch 2, dadurch gekennzeichnet, daß die beiden abwechselnden Schichten Halbleiterschichten sind, wobei die zweite Schicht (SC2) eine Energie des verbotenen Bandes besitzt, die für wenigstens einen Teil der von der ersten Schicht absorbierbaren Lichtquanten größer als die Energie der Fluoreszenz-Lichtquanten ist, so daß die zweite Schicht für diese Quanten durchlässig ist.

4. Laser nach einem der Ansprüche 2 und 3, dadurch gekennzeichnet, daß die Halbleiterschicht oder die Halbleiterschichten massiv sind.

5. Laser nach einem der Ansprüche 2 und 3, dadurch gekennzeichnet, daß die Halbleiterschicht oder die Halbleiterschichten Schichten sind, die Mehrfachquantensenken bilden.

6. Laser nach Anspruch 2, dadurch gekennzeichnet, daß die zweite der abwechselnden Schichten dielektrisch und für wenigstens einen Teil der von der ersten Schicht absorbierbaren Lichtquanten durchlässig ist.

7. Laser nach Anspruch 2, dadurch gekennzeichnet, daß die Schichten Verbindungen auf der Basis von Galliumarsenid sind.

8. Laser nach Anspruch 7, dadurch gekennzeichnet, daß eine der Schichten Aluminium oder Indium oder Antimon enthält.

9. Laser nach Anspruch 2, dadurch gekennzeichnet, daß die zweite Schicht ein Calcium-Strontium-Fluorid ist.

10. Laser nach Anspruch 2, dadurch gekennzeichnet, daß die Halbleiterschichten Verbindungen der Gruppen II und VI des Periodensystems sind, z. B. ZnSe, CdTe, ZnS, CdS, CdSe.

11. Laser nach einem der vorhergehenden Ansprüche, dadurch gekennzeichnet, daß das verstärkende Medium ein titandotierter Saphir ist.

12. Laser nach einem der vorhergehenden Ansprüche, dadurch gekennzeichnet, daß der aktive Spiegel verschiedene Bereiche enthält, die Reflektivitätsmaxima für unterschiedliche Wellenlängen besitzen.

13. Laser nach einem der vorhergehenden Ansprüche, dadurch gekennzeichnet, daß er einen Hohlraum enthält, der mit zwei herkömmlichen Spiegeln versehen ist, sowie eine halbreflektierende Trennplatte (16), um einen Teil der vom reflektierenden Medium abgegebenen Fluoreszenz-Lichtquanten zum aktiven Spiegel zurückzustrahlen.

## Claims

1. Laser including an amplifying medium (10), a pumping source (12) for exciting the amplifying medium and producing fluorescence photons, and two mirrors defining a cavity containing the amplifying medium, characterized in that at least one of the mirrors is an active mirror (MB) producing light at a defined wavelength, in response to an excitation by the fluorescence photons from the amplifying medium.

2. Laser according to Claim 1, characterized in that:

a) - the active mirror (MB) is a Bragg reflector constituted by a repeated stacking arrangement of alternate layers (SC1, SC2) of different optical indices (n1, n2) and of thicknesses (e1, e2) chosen in order to provide a peak in reflectivity perpendicular to the mirror, for a wavelength substantially equal to the desired laser emission wavelength, and

b) - at least one of the layers of the alternation is a semiconductor layer (SC1) exhibiting a radiative transition energy corresponding substantially to the desired laser emission wavelength, and a band-gap energy less than or equal to the energy of the fluorescence photons so that the said layer absorbs part of the fluorescence photons emitted by the amplifying medium.

3. Laser according to Claim 2, characterized in that both layers of the alternation are semiconductors, the second layer (SC2) exhibiting a band-gap energy greater than the energy of the fluorescence photons for at least part of the photons which may be absorbed by the first layer, so as to be transparent for these photons.

4. Laser according to one of Claims 2 and 3, characterized in that the semiconductor layer or layers are massive.

5. Laser according to one of Claims 2 and 3, characterized in that the semiconductor layer or layers are multiple quantum well layers.

6. Laser according to Claim 2, characterized in that the second layer of the alternation is dielectric and transparent for at least part of the photons absorbable by the first layer.

7. Laser according to Claim 2, characterized in that the layers are compounds based on gallium arsenide.

8. Laser according to Claim 7, characterized in that one of the layers contains aluminium or indium or antimony.

9. Laser according to Claim 2, characterized in that the second layer is a calcium strontium fluoride.

10. Laser according to Claim 2, characterized in that the semiconductor layers are II-VI compounds, such as ZnSe, CdTe, ZnS, CdS, CdSe.

11. Laser according to one of the preceding claims, characterized in that the amplifying medium is a titanium-doped sapphire.

12. Laser according to one of the preceding claims, characterized in that the active mirror includes various regions having reflectivity peaks at different wavelengths.

13. Laser according to one of the preceding claims, characterized in that it includes a cavity provided with two conventional mirrors and a semi-reflecting splitting plate (16) in order to send part of the fluorescence photons emitted by the amplifying medium back towards the active mirror.

FIG.1

FIG.2

ex : Ga As
Ga Al As

FIG.3

FIG. 4

FIG.5

FIG.6

FIG.7

FIG.8

FIG.9